# EUROPÄISCHE PATENTSCHRIFT

(11) **EP 1 621 803 B1**
(45) Veröffentlichungstag und Bekanntmachung des Hinweises auf die Patenterteilung: **07.11.2007**
(21) Anmeldenummer: 05024204.9
(22) Anmeldetag: 21.05.2001
(51) Int. Cl.: F16J 15/08

(54) **Zylinderkopfdichtung**
Cylinderhead gasket
Joint de culasse de cylindre

(30) Priorität: 24.07.2000 DE 10035969
(43) Veröffentlichungstag der Anmeldung: 01.02.2006
(62) Teilanmeldung aus: 01112402.1
(73) Patentinhaber: Federal-Mogul Sealing Systems GmbH, 57562 Herdorf (DE)
(72) Erfinder: Schmitt, Klaus, 57520 Grünebach (DE); Cierocki, Klaus c/o Federal Mogul, 57562 Herdorf (DE)
(74) Vertreter: Becker Kurig Straus

(56) Entgegenhaltungen:
- JP-A- 4 347 065
- US-A- 5 560 623
- US-A- 6 027 124

## Beschreibung

Die vorliegende Erfindung betrifft eine metallische Zylinderkopfdichtung gemäß dem Oberbegriff der Ansprüche 1 und 2. Eine derartige Zylinderkopfdichtung ist beispielsweise aus der JP-4-347065 bekannt.

Aus der EP 0695896 A1 ist bereits eine metallische Dichtung bekannt, die eine in ihrem dem Brennkammerraum zugewandten Bereich verdickte Stopperlage aufweist. Diese Stopperlage weist jedoch keine ausreichende Flexibilität auf.

Aus der EP 0780561 B1 ist schließlich bereits eine metallische Zylinderkopfdichtung bekannt, die in Ihrem Randbereich eine als Federwegbegrenzer ausgebildete verdickte bzw. durch Trapezsicken gebildete Stopperlage aufweist. Auch diese Stopperlage ist nicht geeignet, den im heutigen Automobilbau gesetzten Elastizitätsanforderungen voll zu genügen.

Bei Zylinderkopfdichtungen kommt es häufig zu einer relativ starken Entlastung der Stopperzonen, die durch die motorischen Betriebsdaten bedingt ist. In derartigen Fällen kommt es zu einem sogenannten "Überblasen" von Schleichgasen, die durch die nachgeschaltete Vollsicke zu kompensieren bzw. abzudichten ist. In diesen Fällen kann es jedoch bei nicht ausreichender Belastung der Vollsicken zu einer Undichtigkeit kommen, die sich in einem Druckabfall bemerkbar macht.

Des Weiteren kommt es im Motorverband zu einer unregelmäßigen Belastung der Dichtung entlang der Brennräume aufgrund der Verspannungssituation. Im sogenannten schraubenfernen Bereich kommt es im allgemeinen zu einer deutlich schwächeren Belastung der Dichtzonen, die nur unter sehr großem Aufwand in den Griff zu bekommen ist.

Aufgabe der vorliegenden Erfindung ist es daher, die aus dem Stand der Technik bekannten gattungsgemäßen Zylinderkopfdichtungen derart weiterzuentwickeln, dass die Stopperzonen in radialer Richtung elastischer bzw. flexibler ausgebildet werden.

Diese Lösung der Aufgabe wird durch die Merkmale gemäß Anspruch 1 erreicht.

Weitere Vorteile, Merkmale und Anwendungsmöglichkeiten der vorliegenden Erfindung ergeben sich aus der nachfolgenden Beschreibung eines Ausführungsbeispiels in Verbindung mit der Zeichnung.

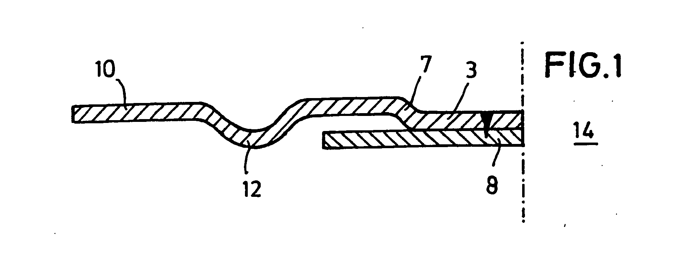

Fig. 1 ist eine Ausführungsform einer metallischen Zylinderkopfdichtung gemäß der Erfindung.

In der in Fig. 1 gezeigten Ausführungsform einer metallischen Zylinderkopfdichtung gemäß der Erfindung ist eine als Funktionslage ausgebildete metallische Dichtungslage gezeigt, die in ihrem an den Brennraum 14 grenzenden Bereich mit entsprechenden Öffnungen entsprechend den Brennkammern ausgestattet ist. Die Dichtungslage besitzt eine Vollsicke 12, die zur elastischen Abdichtung der Brennkammern dient und die Öffnungen umschließt. Ferner hat die Dichtungslage einen flachen Abschnitt 3, der sich unmittelbar bis an die Öffnung bzw. an die Brennkammer erstreckt. Mit dem flachen Abschnitt 3 ist in radialer Überlappung eine Ringeinlage 4 verschweißt. In der in Fig. 1 gezeigte Ausführungsform einer metallischen Zylinderkopfdichtung gemäß der Erfindung ist eine im wesentlichen unprofilierte ungesickte Ringeinlage 8 vorgesehen, die radial überlappend mit einer in der Dichtungslage 10 vorgesehenen Halb-Sicke 7 angeordnet ist und mit dieser zusammenwirkt. Die Sicke 7 ist in der Dichtungslage angeordnet. Auf diese Weise wird eine verbesserte Anpassung der flexiblen Stopperzone an die unterschiedlichen Gegebenheiten des Brennraums bewirkt und die Dichtpressung lokal erhöht. Die Sicke 7 (alternativ eine Vollsicke) befindet sich etwa radial in Höhe der halben axialen Abmessung der geradlinigen Ringeinlage.

Mit allen Ausführungsformen der Erfindung wird die Elastizität des radial an die Brennkammern grenzenden Stopperbereichs erhöht, um einer möglichen Undichtigkeit bei Druckabfall vorzubeugen. Das sogenannte "Überblasen" von Schleichgasen wird wirksam vermieden.

## Patentansprüche

1. Metallische Zylinderkopfdichtung, aufweisend mindestens eine Dichtungslage (10) mit Öffnungen entsprechend den Brennkammern (14) bei Brennkraftmaschinen, einem flachen Abschnitt (3), der um die Öffnungen herum angeordnet ist und einer Vollsicke (12), die zur elastischen Abdichtung der Brennkammern dient, und die benachbart dem flachen Abschnitt (3) die Öffnungen umschließt, wobei die Dichtungslage (10) in ihrem dem Brennraum (14) zugewandten Bereich mit einer Ringeinlage (8) versehen ist, um eine elastische Abdichtzone am Rand des Brennraumes (14) zu erzeugen, wobei die Ringeinlage (8) mit dem flachen Abschnitt (3) verschweißt ist, **dadurch gekennzeichnet, dass** der flache Abschnitt (3) in der radialen Ebene der Ringeinlage (8) eine Halbsicke (7) aufweist, und wobei sich die Vollsicke (12) in der Dichtungslage (10) in Richtung der Seite erstreckt an der die Ringeinlage (8) die Dichtungslage (10) geschweißt ist.

2. Metallische Zylinderkopfdichtung nach Anspruch 1, **dadurch gekennzeichnet, dass** die Vollsicke (12) höher ist als die Halbsicke (7).

## Claims

1. Metal cylinder head gasket having at least one sealing layer (10) with openings corresponding to the combustion chambers (14) in internal-combustion engines, a flat section (3), which is arranged around the openings and a full bead (12), which serves to elastically seal the combustion chambers and which, adjacent to the flat section (3), encloses the openings, wherein the sealing layer (10), in its region facing the combustion chamber (14), is provided with an annular inlay (8) in order to create a flexible sealing zone at the edge of the combustion chamber (14), the annular inlay (8) being welded to the flat section (3), **characterized in that**, in the radial plane of the annular inlay (8), the flat section (3) has a half bead (7), and wherein the full bead (12) in the sealing layer (10) extends towards the side, on which the annular inlay (8) is welded to the sealing layer (10);

2. Metal cylinder head gasket according to Claim 1, **characterized in that** the full bead (12) is higher than the half bead (7).

## Revendications

1. Joint de culasse métallique présentant au moins une couche d'étanchéité (10) avec des ouvertures en fonction des chambres de combustion (14) sur des moteurs à combustion interne, une partie (3) plate, qui est disposée tout autour des ouvertures, et une moulure pleine (12), qui sert à l'étanchéité élastique des chambres de combustion, et qui entoure les ouvertures à proximité de la partie (3) aplatie, la couche d'étanchéité (10) étant dotée d'une insertion annulaire (8) dans sa zone tournée vers l'espace de combustion (14), afin de générer une zone d'étanchéité élastique sur le bord de l'espace de combustion (14), l'insertion annulaire (8) étant soudée à la partie (3) plate, **caractérisé en ce que** la partie (3) plate présente une demi-moulure (7) dans le plan radial de l'insertion annulaire (8) et la moulure pleine (12) s'étendant dans la couche d'étanchéité (10) en direction du côté sur lequel l'insertion annulaire (8) de la couche d'étanchéité (10) est soudée.

2. Joint de culasse métallique selon la revendication 1, **caractérisé en ce que** la moulure pleine (12) est plus haute que la demi-moulure (7).
